# EUROPEAN PATENT SPECIFICATION

(11) **EP 2 112 033 B1**
(45) Date of publication and mention of the grant of the patent: **13.08.2014**
(21) Application number: 09150391.2
(22) Date of filing: 12.01.2009
(51) Int. Cl.: B60R 21/213, B60R 21/201

(54) **Curtain airbag device**
Seitenairbagvorrichtung
Dispositif de coussin d'air de type rideau

(30) Priority: 23.04.2008 JP 2008112563; 08.05.2008 JP 2008122796; 09.06.2008 JP 2008150874
(43) Date of publication of application: 28.10.2009
(73) Proprietor: Takata Corporation, Tokyo 106-8510 (JP)
(72) Inventor: Yokota, Masatoshi c/o Takata Corporation, Tokyo 106-8510 (JP); Watanabe, Seiji c/o Takata Corporation, Tokyo 106-8510 (JP); Minamikawa, Takeki c/o Takata Corporation, Tokyo 106-8510 (JP)
(74) Representative: Vossius & Partner

(56) References cited:
- WO-A1-02/28690
- JP-A- 2005 104 234
- US-A1- 2006 197 316

## Description

The present invention relates to a curtain airbag device comprising a bracket for mounting the curtain airbag, which develops in the form of a curtain along a side of a vehicle body of an automobile and the like, to the vehicle body.

Hitherto, as one of airbags that are inflated to extend by introducing gas therein at collision of a vehicle such as an automobile and the like, a so-called curtain airbag has been known that develops along a side of a vehicle body. This curtain airbag is accommodated along the corner portion of intersection between a ceiling portion and a side face portion in the interior of a vehicle body in a state of being folded in a slender form in normal times, and is inflated to extend downwardly along a side of the vehicle body by introducing gas therein when being subjected to an impact from the side thereof due to a lateral collision or the like.

Generally, this curtain airbag is mounted to a vehicle body in a manner such that a plurality of attachment pieces (attachment portions) provided in an edge portion of an airbag with predetermined spacings from each other are fixed on an airbag fixing portion provided in the corner portion of intersection in the interior of the vehicle body using curtain airbag brackets, bolts and the like at a plurality of points in a fore-and-aft direction of the vehicle body. As a curtain airbag bracket like this, for example, there is one described in JP-2002-053003 A (Patent Document 1).

This curtain airbag bracket of a prior art has an angle-bent configuration having a substantially L-shaped cross section and includes a vehicle body attaching portion (attachment portion), which is attached to a vehicle body using a bolt, and a bottom plate portion (counter-force bearing portion) angle-bent with respect to the vehicle body attaching portion, the bottom plate portion being allowed to bear the counter force produced when a curtain airbag develops.

US 2006/197316 A1, which is considered as the closest prior art, discloses a curtain airbag device according to the preamble of claim 1 and relates to an airbag module installation system including an airbag module with an airbag and a case configured to hold the airbag module prior to and during installation of the airbag module into a vehicle. The installation system may include a "one-touch"-clip configured to fasten the airbag module to the vehicle body.

WO 02/28690 A1 relates to an arrangement for mounting an inflatable element such as an inflatable side curtain in a motor vehicle. A clip is provided to engage and retain an aperture formed in a part of an inflatable element. This clip comprises a vertical plate carrying, at its upper edge, a horizontally extending flange which extends to one side, the front side, of the plate. A recess divides the flange into two terminal regions.

JP 2005-104234 A relates to a bracket for mounting an airbag covering a side window of a vehicle to the vehicle body. The upper end of the airbag body comprises a plurality of mounting pieces. A bracket is mounted to the airbag in that each mounting piece is inserted or passed through an insertion hole, and by hooking a hole part on a hooking part of the bracket. The bracket is then fastened to a vehicle body panel by a bolt.

As described above, a curtain airbag is provided with attachment pieces attached to a vehicle body at a plurality of points in a fore-and-aft direction of the vehicle body, and is accommodated along a corner portion of intersection in the vehicle cabin in a state of being folded in a slender form in normal times. At this time, particularly at a part shifting from a front pillar to a roof side rail of the corner portion of intersection in the vehicle cabin, the curtain airbag is accommodated in a state of being curved for construction reasons. As a result, in the case when the curtain airbag is inflated to extend downwardly due to a lateral collision or the like, the attachment portion in the curved part shifting from the front pillar to the roof side rail is subjected to tension (downward tensile force) following the downward expansion of the curtain airbag.

Accordingly, from a view of optimizing the curtain airbag, it is required to effectively absorb the downward tension following the expansion of the curtain airbag in the attachment portion at the part shifting from the front pillar to the roof side rail, and to maintain a proper mounted state of the curtain airbag.

An object of the present invention is to provide a curtain airbag device with which a proper state of mounting a curtain airbag with respect to a vehicle body is able to be maintained. This object is achieved with the features of the claims.

In order to achieve the above object, the curtain airbag bracket according to the invention includes a vehicle body attaching portion for attaching the curtain airbag bracket to the vehicle body, and an airbag mounting portion for mounting an attachment piece provided in an edge portion of the curtain airbag, the airbag mounting portion being provided in a state of being angle-bent or being curved toward the interior of the vehicle body with respect to the vehicle body attaching portion.

Generally, a curtain airbag developing along a side of a vehicle body in a form of a curtain is mounted to the vehicle body at a plurality of points in its fore-and-aft direction in a manner that a plurality of attachment pieces provided in an edge portion of the curtain airbag with predetermined spacings are fixed to an airbag fixing portion provided in the corner portion of intersection between a ceiling portion and a side face portion in the interior of the vehicle body using bolts or the like through the intermediary of curtain airbag brackets.

In normal times, the curtain airbag is accommodated along the corner portion of intersection in the vehicle cabin in a state of being folded in a slender form. In this occasion, particularly at a part shifting from a front pillar to a roof side rail of the corner portion of intersection in the vehicle cabin, the curtain airbag is accommodated in a state of being curved for construction reasons. Therefore, in the case when the curtain airbag is inflated to extend downwardly due to a lateral collision or the like, the attachment portion in the curved part shifting from the front pillar to the roof side rail is subjected to tension (downward tensile force) following the downward expansion of the curtain airbag.

At this time, according to the invention, the attachment piece of the curtain airbag is attached to the airbag mounting portion of the curtain airbag bracket, which is provided toward the interior of the vehicle body in a state of being angle-bent or being curved with respect to the vehicle body attaching portion for attaching the bracket to the vehicle body. Thereby, when the curtain airbag is inflated to extend, the angle-bent portion or the curved portion of the curtain airbag bracket is elastically or plastically deformed in the direction corresponding to tension, and the tension is thereby able to be effectively absorbed. Therefore, it is possible to maintain a proper mounted state of the curtain airbag with respect to the vehicle body by adopting the bracket of the invention to the attachment portion in the curved part shifting from the front pillar to the roof side rail.

The curtain airbag bracket according to a preferred embodiment of the invention is **characterized in that** the airbag mounting portion is provided in a state of being angle-bent toward the interior of the vehicle body substantially in right angle with respect to the vehicle body attaching portion.

In this preferred embodiment, the airbag mounting portion is provided in a state of being angle-bent toward the interior of the vehicle body substantially in right angle with respect to the vehicle body attaching portion. Thereby, when the curtain airbag is inflated to extend, tension is able to be absorbed due to that the substantially angle-bent portion is elastically or plastically deformed in the direction corresponding to the tension, while counter force applied to the curtain airbag bracket when the inflation of the curtain airbag is initiated is able to be received by the airbag mounting portion, which is angle-bent substantially in right angle with respect to the vehicle body attaching portion toward the interior of the vehicle body. As a result, the development characteristics of the curtain airbag are able to be improved.

The curtain airbag bracket of the invention is **characterized in that** the airbag mounting portion includes an inserting through hole for allowing the attachment piece of the curtain airbag to be inserted therethrough.

According to the invention the airbag mounting portion includes an inserting through hole for allowing the attachment piece of the curtain airbag to be inserted therethrough. Thereby, when the attachment piece is attached to the airbag mounting portion of the curtain airbag bracket, the attachment piece is able to be attached to the airbag mounting portion in a manner that the attachment piece is folded back in a loop-like shape after being inserted through the inserting through hole, and both portions of the attachment piece after being inserted through the inserting through hole are overlapped to be sewn with each other. Since such a configuration is employed that the attachment piece is attached to the curtain airbag bracket in a loop-like form as described above, in comparison with the configuration in which the attachment piece is attached to the curtain airbag bracket using an attachment member such as a rivet, an attachment bolt or the like, the attachment member becomes unnecessary and the number of parts can be reduced.

The curtain airbag bracket in a further embodiment of the invention is **characterized in that** the inserting through hole is a slit having a length equal to or longer than a width of the attachment piece.

Thereby, when the attachment piece is inserted through the inserting through hole, it is prevented that a wrinkle, a bend, and the like arise on the attachment piece. As a result, it is possible to further maintain a proper mounted state of the curtain airbag.

In order to achieve the above object, the curtain airbag device according to another embodiment of the invention is characterized in that it further comprises an inflator for supplying gas to the curtain airbag.

In the curtain airbag device according to the invention, the attachment piece of the curtain airbag is mounted to the airbag mounting portion of the curtain airbag bracket, which is provided toward the interior of the vehicle body in a state of being angle-bent or being curved with respect to the vehicle body attaching portion for attaching the bracket to the vehicle body. Thereby, when the curtain airbag is inflated to extend, the angle-bent portion or the curved portion of the curtain airbag bracket is elastically or plastically deformed in the direction corresponding to tension, and the tension is thereby able to be effectively absorbed. Therefore, it is possible to maintain a proper mounted state of the curtain airbag with respect to the vehicle body by adopting the bracket of the present fourth invention to the attachment portion in the curved part shifting from the front pillar to the roof side rail.

According to the present invention, a proper mounted state of the curtain airbag with respect to the vehicle body is able to be maintained.

An embodiment of the present invention will be described below with reference to the drawings:
Fig. 1 is an explanatory drawing schematically illustrating a state of mounting a curtain airbag device according to an embodiment of the present invention to an automobile;
Fig. 2 is an external side view of the whole of the curtain airbag device;
Fig. 3 is a partially cutaway perspective view illustrating a state of accommodating a curtain airbag;
Fig. 4 is a magnified view of a portion IV in Fig. 2;
Fig. 5 is a view illustrating a state in which a band in the portion IV is broken and an attachment piece is developed;
Figs. 6 are an elevation view, a top view and a side view respectively illustrating a detailed construction of a bracket; and
Figs. 7 are views for explaining advantages of an embodiment of the present invention.

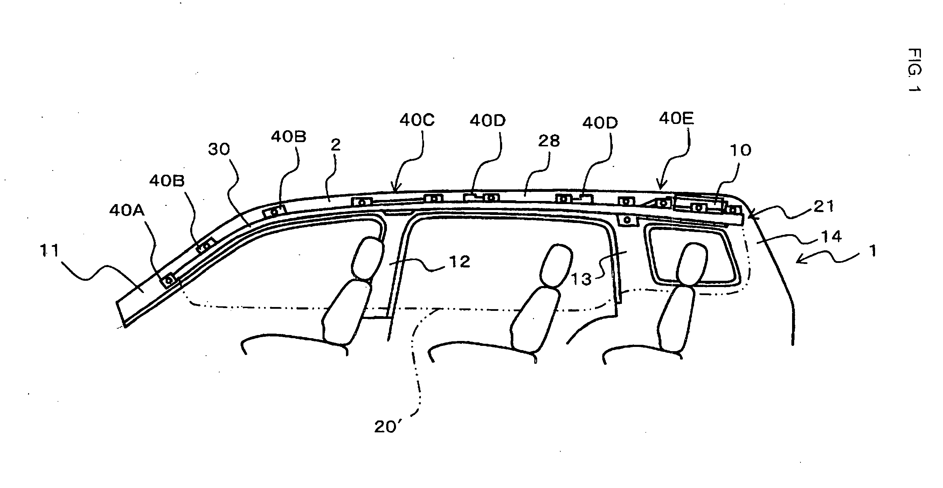

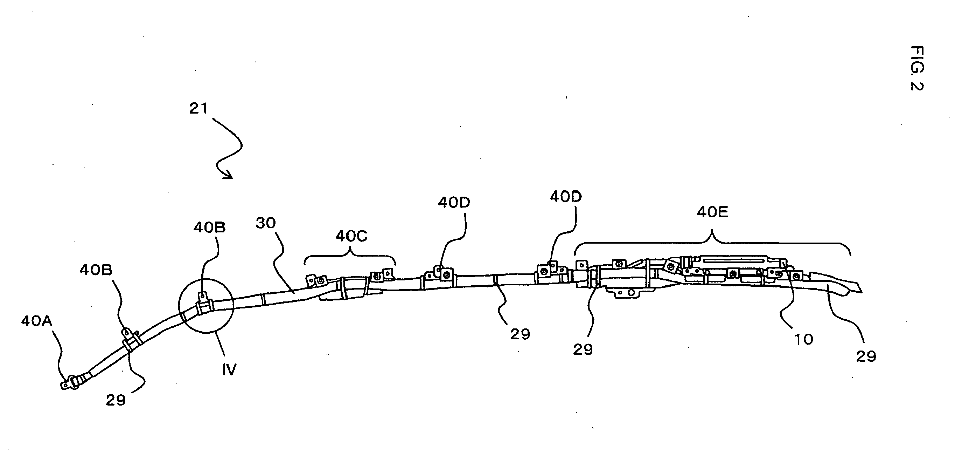

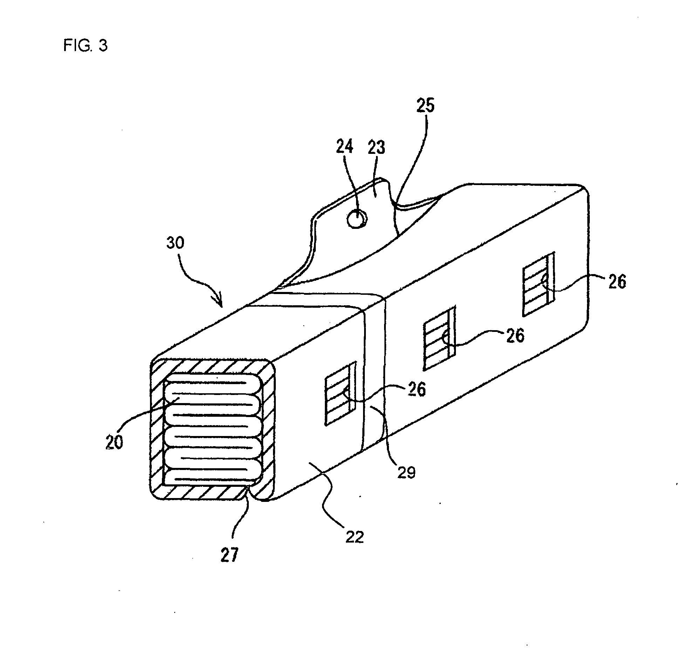

Fig. 1 is an explanatory drawing schematically illustrating a state of mounting a curtain airbag device to an automobile, the curtain airbag device being according to an embodiment of the present invention. And, Fig. 2 is an external side view of the whole of the curtain airbag device. It is noted that, in the following, a curtain airbag device and a portion thereof mounted to a vehicle body on its driver seat side (right side toward the front of a vehicle body) are described by illustrating in the drawings for convenience of explanation, and except particularly described, the explanation is provided so that the left side in the drawings is the front side of a vehicle body, the right side in the drawings is the rear side, and the up-and-down direction in the drawings is the up-and-down direction of the vehicle body. In addition, Fig. 3 is a partially cutaway perspective view illustrating a state of accommodating a curtain airbag, and particularly in this drawing, the direction toward the viewer from the lower left side in the drawing corresponds to the front side of the vehicle body.

In these Fig. 1, Fig. 2 and Fig. 3, there are provided three rows of aligned seats in a fore-and-aft direction in the interior of the vehicle body 1 of an automobile, and a curtain airbag device 21 is provided in the corner portion of intersection between a ceiling portion and a side face portion in the interior of the vehicle body 1.

The curtain airbag device 21 includes an airbag holding body 30, which is configured to hold the whole of a folded curtain airbag 20 by covering with a breakable cover member 22, an inflator 10, which is mounted in the rear side of the curtain airbag device 21 and supplies a pressurized gas (pressurized fluid) to the curtain airbag 20, a plurality of brackets 40A, 40B, 40C and 40D for mounting the airbag holding body 30 to the vehicle body 1, and a construction body bracket 40E for mounting the airbag holding body 30 and the inflator 10 to the vehicle body 1 in a state of being connected to each other. And, in the event of a lateral collision, rollover or the like of an automobile, a sensor (not shown) for detecting a collision to send an initiation signal to the inflator 10 detects the collision, the initiation signal is input from an inflator control circuit (not shown) to an initiator (not shown) of the inflator 10 to cause the initiator to initiate, the inflator 10 is activated to blow out pressurized gas for inflating an airbag, and the curtain airbag 20 is inflated to extend downwardly as indicated with a dot-dot-dash line 20' in Fig. 1, by which the head portion of an occupant is restrained.

In the airbag holding body 30, as illustrated in Fig. 3, the curtain airbag 20 is held by the cover member 22 in a state of being folded by being overlaid with each other in a fanfold manner in an up-and-down direction so as to show a rectangular cross sectional shape. At this time, ear-shaped attachment pieces 23, which are provided to an upper edge portion of the curtain airbag 20 so as to project therefrom, project upwardly through narrow openings (slots) 25 provided in a top-face portion of the cover member 22 on its vehicle body side. It is noted that the attachment pieces 23 may be one formed in one piece with the curtain airbag 20, or one formed as a separate member to be joined to the edge portion of the curtain airbag 20 by being sewn (also the same for attachment pieces 23A, 23B described later).

The attachment pieces 23 are provided in a plural number in the upper end portion of the curtain airbag 20 along its longitudinal direction, each of the attachment pieces 23 is provided with an inserting through hole 24 for an attachment member (for example, a rivet, an attachment bolt or the like). Furthermore, in a side face portion of the cover member 22 on the vehicle cabin side, a plurality of up-and-down directional openings 26 are provided in its longitudinal direction, and through the openings 26 it is able to visually observe the folded state of the curtain airbag 20 from the outside of the cover member 22.

In a corner portion of the cover member 22 on the vehicle cabin side, in which the side face portion on the vehicle cabin side and the top-face portion of the cover member 22 intersect with each other, a breakage portion 27 is provided that is to be a breakage point of the cover member 22 when the airbag 20 is inflated. The outer periphery of the cover member 22 is held by being wound with a plurality of breakable bands 29 by respective predetermined spacings. And like this, the whole of the cover member 22 and the curtain airbag 20 held inside thereof constitutes the airbag holding body 30.

The airbag holding body 30 has a substantially bow shape along a longitudinal direction, and fixed to an airbag fixing portion 28 through the intermediary of the brackets 40A, 40B, 40C, 40D and the construction body bracket 40E, the airbag fixing portion 28 being provided in the corner portion of intersection between the ceiling portion and the side face portion, specifically along a roof side rail 2 from an A-pillar 11 (front pillar) in the interior of the vehicle body 1.

The bracket 40A is attached to the attachment piece 23 positioned at the tip of the airbag holding body 30 on the front side of the vehicle body, and is fixed to the inside of the A-pillar 11. In this bracket 40A, although the detailed construction is not particularly illustrated in the drawings, there is formed a folding-back hole for inserting through and folding back an attachment piece 23A (not shown, being formed to be longer than the attachment piece 23 illustrated in Fig. 3) provided in the tip portion of the curtain airbag 20 in the airbag holding body 30 on the front side of the vehicle body. The attachment piece 23A inserted through the folding-back hole is folded back and its overlapped portion is fastened by sewing or by means of a fastening member (for example, a rivet or the like, the same for the following); thereby, a configuration is provided in which the tip of the curtain airbag 20 is attached to the bracket 40A.

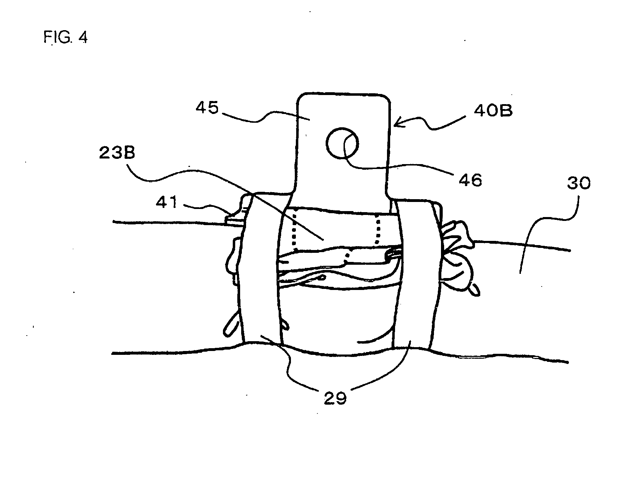

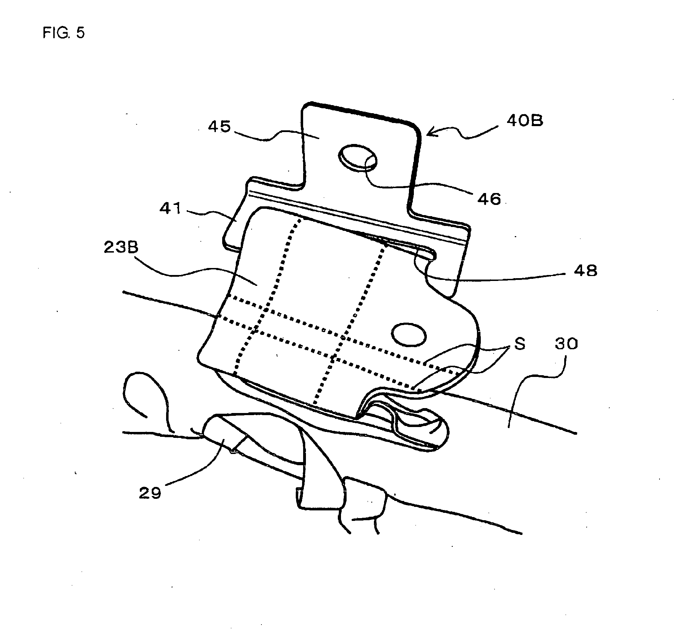

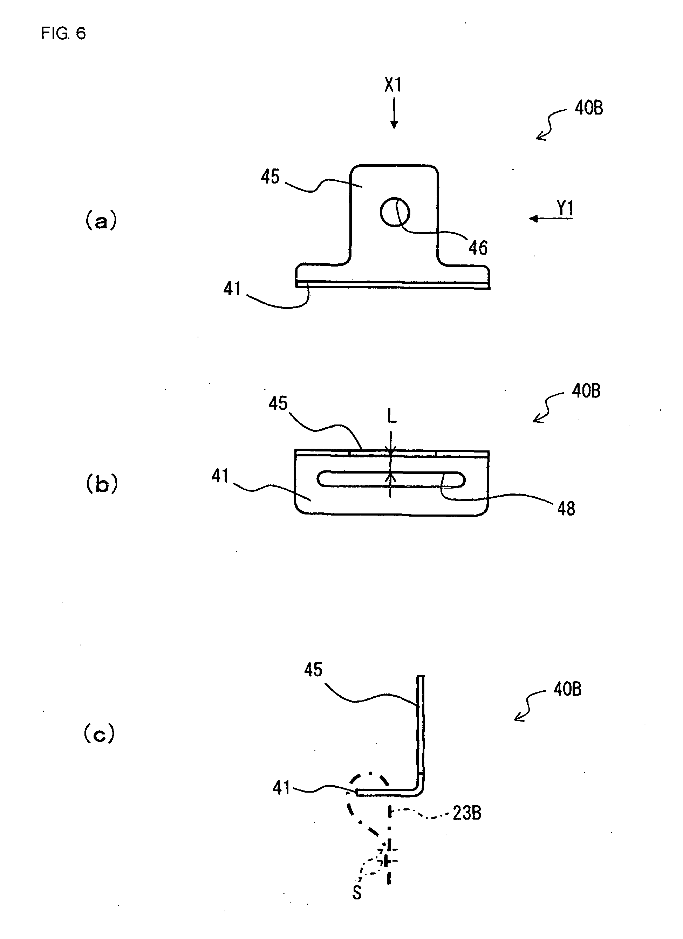

The bracket 40B (curtain airbag bracket) is provided at two places particularly in the curved part shifting from the A-pillar 11 to the roof side rail 2 of the corner portion of intersection. In the bracket 40B, although the details are described later, there is formed a slit 48 (refer to Fig. 5 and Fig. 6 described later) for inserting through and folding back an attachment piece 23B (refer to Fig. 4 to Fig. 6 described later, being formed to be longer than the attachment piece 23 illustrated in Fig. 3) of the curtain airbag 20 in the airbag holding body 30 as with the above bracket 40A, and the attachment piece 23B inserted through the slit 48 is folded back and its overlapped portion is fastened by sewing or by means of a fastening member; thereby, a configuration is provided in which the curtain airbag 20 is mounted to the bracket 40B.

The bracket 40C is provided, in this example, on a B-pillar 12 of the airbag fixing portion 28, the B-pillar 12 being positioned a second distance from the front of the vehicle body 1. This bracket 40C is, although the detailed construction is not particularly illustrated in the drawings, a bracket having two pieces of airbag mounting portions for mounting the attachment piece 23.

The bracket 40D is provided, in this example, at two places on the airbag fixing portion 28, the two places being located between the B-pillar 12 positioned a second distance from the front of the vehicle body 1 and a C-pillar 13 positioned a third distance from the front of the vehicle body 1. Although the detailed construction is not particularly shown in the drawings, this bracket 40D includes a plural number (two in this example) of the airbag mounting portions for mounting the attachment piece 23 of the curtain airbag 20 in the airbag holding body 30, and is configured so that the attachment piece 23 is able to be selectively attached in response to a plural number of the airbag mounting portions.

The bracket 40E is provided, in this example, at a place on the airbag fixing portion 28, the place being located between the C-pillar 13 positioned a third distance from the front of the vehicle body 1 and a D-pillar 14 (rear pillar) positioned in the rear of the vehicle body 1. Although the detailed construction is not particularly shown in the drawings, this bracket 40E includes a plural number (four in this example) of the airbag mounting portions for mounting the attachment piece 23 of the curtain airbag 20 in the airbag holding body 30, and is configured so as to hold the inflator 10 in parallel with and in proximity to the airbag holding body 30.

Fig. 4 is a magnified view of a portion IV including the bracket 40B in Fig. 2, and Fig. 5 is a view illustrating a state in which the band 29 in this portion IV is broken and the attachment piece 23B is developed. In addition, Fig. 6(a) is an elevation view illustrating a detailed construction of the bracket 40B, Fig. 6(b) is a top view of the bracket 40B seen from the direction X1 in Fig. 6(a), and Fig. 6(c) is a side view of the bracket 40B seen from the direction Y1 in Fig. 6(a). Incidentally, in Fig. 6(c), the attachment piece 23B of the curtain airbag 20 is indicated with an imaginary line.

As illustrated in Fig. 4, Fig. 5 and Fig. 6, the bracket 40B includes a vehicle body attaching portion 45 for attaching the bracket 40B to the vehicle body 1 and an airbag mounting portion 41 for mounting the attachment piece 23B provided in the edge portion of the curtain airbag 20, the airbag mounting portion 41 being provided in a state of being bent substantially in right angle with respect to the vehicle body attaching portion 45 toward the interior of the vehicle body (the side toward the viewer in Fig. 6(a), the lower side in Fig. 6(b), the left side in Fig. 6(c)). Thereby, the bracket 40B has a substantially "L" shape when seen from the side as illustrated in Fig. 6(c).

The vehicle body attaching portion 45 is formed such that a portion thereof on the lower side has the same width dimension as the length of the airbag mounting portion 41 in its longitudinal direction and the other portion thereabove has a width dimension smaller than the length of the airbag mounting portion 41 in its longitudinal direction. In the vehicle body attaching portion 45, there is provided an inserting through hole 46 for inserting through an attachment member (for example, a rivet, an attachment bolt or the like) for fixing the bracket 40B to the vehicle body 1 so that the center of the hole is positioned on the center line of the whole of the vehicle body attaching portion 45. The bracket 40B is fixed to the vehicle body 1 by inserting through the attachment member into the inserting through hole 46 of the vehicle body attaching portion 45 and by fitting in a fit hole (not shown) provided in the airbag fixing portion 28 on the vehicle body side (by fastening in a threaded hole in the case of an attachment bolt).

On the other hand, the airbag mounting portion 41 includes the slit 48 (inserting through hole) for inserting through the attachment piece 23B of the curtain airbag 20. This slit 48 is formed to be shorter than the overall length of the airbag mounting portion 41 in its longitudinal direction and to have a length equal to or longer than the width of the attachment piece 23B so as to allow the attachment piece 23B to be inserted therethrough by being arranged in parallel with the longitudinal direction of the airbag mounting portion 41.

In the bracket 40B configured like this, as illustrated in Fig. 5 and Fig. 6(c), when the attachment piece 23B of the curtain airbag 20 is attached to the airbag mounting portion 41 of the bracket 40B, the attachment piece 23B is folded back in a loop-like shape after being inserted through the slit 48, and both portions of the attachment piece 23B after being inserted through the slit 48 are overlapped to be sewn with each other (the sewn line is indicated with a mark S in Fig. 5 and Fig. 6(c)). Thereby, the attachment piece 23B of the curtain airbag 20 is attached to the airbag mounting portion 41 of the bracket 40B. Then, the bracket 40B is able to be mounted to the airbag holding body 30 with keeping contact therewith by folding the remaining portion of the attachment piece 23B and fixing it by winding the band 29 therearound (refer to Fig. 4).

Advantages obtained by the curtain airbag bracket 40B of this embodiment configured as described above will be described below.

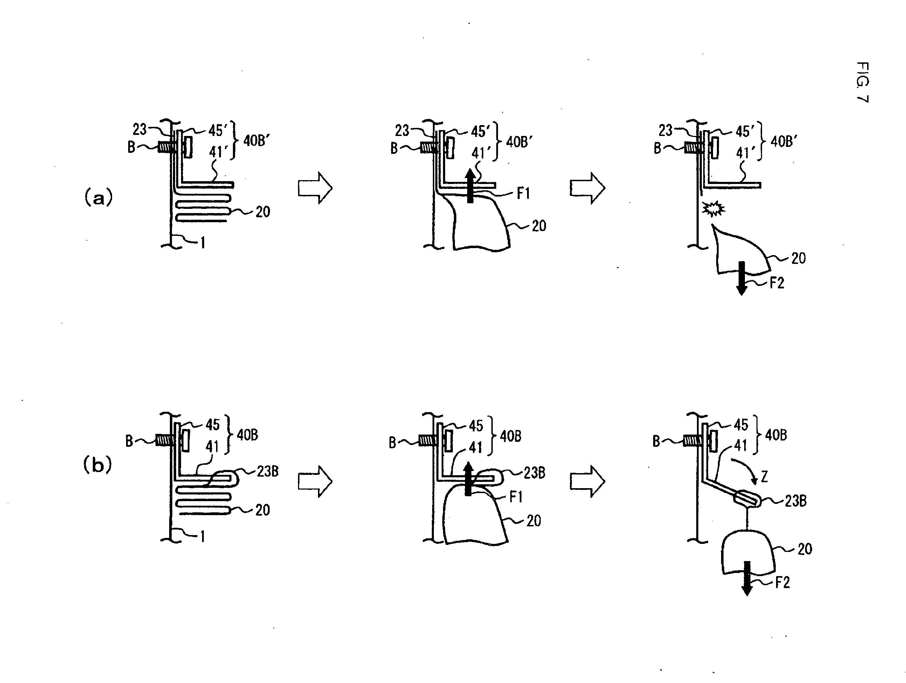

Figs. 7 are views for explaining advantages of this embodiment; in Fig. 7(a), the behavior of a curtain airbag bracket 40B' when an airbag is inflated and extends is conceptually illustrated, the curtain airbag bracket 40B' being a comparable example, and in Fig. 7(b), the behavior of the curtain airbag bracket 40B of this embodiment when an airbag is inflated and extends is conceptually illustrated.

In the comparable example illustrated in Fig. 7(a), the bracket 40B' includes a vehicle body attaching portion 45' attached to a vehicle body 1' by means of a bolt B, and a bottom plate portion 41' provided in a state of being bent substantially in right angle with respect to the vehicle body attaching portion 45' toward the interior of the vehicle body (the right side in Fig. 7(a)). In this comparable example, the curtain airbag 20 is mounted to the vehicle body 1' in a manner that an attachment piece 23 of the curtain airbag 20 is sandwiched between the vehicle body attaching portion 45' and the vehicle body 1' and is fastened together therewith.

In the bracket 40B' of this comparable example, as illustrated in the middle view of Fig. 7(a), the counter force F1 applied to the bracket 40B' when the inflation of the curtain airbag 20 is initiated is able to be received by the bottom plate portion 41' bent substantially in right angle with respect to the vehicle body attaching portion 45'.

However, in the case when the bracket 40B' is adopted to the same place as the bracket 40B of this embodiment, problems as described below arise. That is, in a part shifting from a front pillar to a roof side rail of the corner portion of intersection of the vehicle body 1, the curtain airbag 20 is accommodated in a state of being curved for construction reasons. Accordingly, in the case when the curtain airbag 20 is inflated to extend downwardly due to a lateral collision or the like, the attachment portion in the curved part shifting from the A-pillar 11 to the roof side rail 2 is subjected to tension F2 (downward tensile force) following the downward expansion of the curtain airbag 20.

Therefore, in the case in which the bracket 40B' of the comparable example is adopted to the same place as the bracket 40B of this embodiment, when the tension F2 described above acts relatively heavily, there is a fear that the attachment piece 23 of the curtain airbag 20 is broken away from the airbag body portion as illustrated in the right view in Fig. 7(a). As the result, it is not possible to maintain a proper mounted state of the curtain airbag 20 with respect to the vehicle body 1 with the bracket 40B' of this comparable example.

On the contrary, the bracket 40B of this embodiment includes, as described above, a vehicle body attaching portion 45 and an airbag mounting portion 41, which is provided in a state of being angle-bent substantially in right angle with respect to the vehicle body attaching portion 45 toward the interior of the vehicle body (the right side in Fig. 7(b)) and in which an attachment piece 23B of the curtain airbag 20 is mounted by inserting through a slit 48. Due to the configuration like this, as illustrated in the middle view of Fig. 7(b), when the inflation of the curtain airbag 20 is initiated, the counter force F1 applied to the bracket 40B is able to be received by the airbag mounting portion 41 angle-bent substantially in right angle with respect to the vehicle body attaching portion 45, as with the comparable example described above. Moreover, as illustrated in the right view in Fig. 7(b), even when the tension F2 following the downward expansion of the curtain airbag 20 acts relatively heavily, the angle-bent portion of the bracket 40B is elastically or plastically deformed in the direction corresponding to the tension F2, and thereby the tension is able to be effectively absorbed. As the result, it is possible to maintain a proper mounted state of the curtain airbag 20 with respect to the vehicle body 1.

In addition, the bracket 40B of this embodiment includes a slit 48 used for the airbag mounting portion 41 to allow the attachment piece 23B of the curtain airbag 20 to be inserted therethrough. And, when the attachment piece 23B is attached to the airbag mounting portion 41 of the bracket 40B, as described above, the attachment piece 23B is attached to the airbag mounting portion 41 in a manner that the attachment piece 23B is folded back in a loop-like shape after being inserted through the slit 48, and both portions of the attachment piece 23B after being inserted through the slit 48 are overlapped to be sewn with each other. Since such a configuration is employed that the attachment piece 23B is attached to the bracket 40B in a loop-like form as described above, in comparison with the configuration in which the attachment piece 23B is attached to the bracket 40B using an attachment member such as a rivet, an attachment bolt or the like, an attachment member becomes unnecessary and the number of parts can be reduced.

Furthermore, particularly in this embodiment, the slit 48 formed in the airbag mounting portion 41 of the bracket 40B has a length equal to or more than the width of the attachment piece 23B. Thereby, when the attachment piece 23B is inserted through the slit 48, it is prevented that a wrinkle, a bend, and the like arise on the attachment piece 23B. As the result, it is possible to further maintain a proper mounted state of the curtain airbag 20.

It should be noted that, although the embodiment described above is an example of preferable embodiments of the present invention, the invention is not limited to the embodiment and may be practiced in various other forms not departing from the scope of the invention.

For example, in the above, the airbag mounting portion 41 is configured to be angle-bent substantially in right angle with respect to the vehicle body attaching portion 45 toward the interior of the vehicle body 1, but the bending angle is not necessarily to be a right angle and it may be bent toward the interior of the vehicle body 1 so that the angle between the airbag mounting portion 41 and the vehicle body attaching portion 45 becomes an acute angle or an obtuse angle. Alternatively, a construction in which the airbag mounting portion 41 is not angle-bent but is gradually curved may be employed.

Additionally, in the above, the attachment piece 23B is fastened by being sewn after folded back, but from the viewpoint of obtaining the advantage that "a proper mounted state of a curtain airbag 20 is able to be maintained", it is not necessarily to fasten the attachment piece 23B after folded back by sewing, but may be fastened by means of an attachment member (for example, a rivet or the like).

## Claims

1. A curtain airbag device comprising:
a curtain airbag (20) being adapted to develop along a side of a vehicle body (1) in a form of a curtain, and
a curtain airbag bracket (40B) for mounting the curtain airbag (20) to the vehicle body (1), the curtain airbag bracket (40B) comprising:
a vehicle body attaching portion (45) for attaching the curtain airbag bracket (40B) to the vehicle body (1), and
an airbag mounting portion (41) for mounting an attachment piece (23B) provided in an edge portion of the curtain airbag (20),
the airbag mounting portion (41)
is angle-bent or curved toward the interior of the vehicle body (1) with respect to the vehicle body attaching portion (45),
**characterized in that**
the airbag mounting portion (41) includes an inserting through hole (48) allowing the attachment piece (23B) of the curtain airbag (20)
to be folded back in a loop-like shape around an outer edge of the airbag mounting portion (41) after being inserted through the inserting through hole (48), and
wherein, after being inserted through the inserting through hole (48), both portions of the attachment piece (23B) are overlapped and fastened with each other.

2. The curtain airbag device according to Claim 1, wherein
the airbag mounting portion (41) is adapted to receive a counter force (F1) applied to the curtain airbag bracket (40B) when the inflation of the curtain airbag is initiated, and,
when the airbag is inflated, the airbag mounting portion (41) is adapted to be elastically or plastically deformed by a tensile force (F2) directed opposite to the effective direction of the counter force (F1) when said tensile force (F2) follows the downward expansion of the curtain airbag (20).

3. The curtain airbag device according to Claim 1 or 2, wherein the airbag mounting portion (41) is provided in a state of being angle-bent toward the interior of the vehicle body substantially in right angle with respect to the vehicle body attaching portion (45).

4. The curtain airbag device according to Claim 3, wherein the inserting through hole is a slit (48) having a length equal to or longer than a width of the attachment piece (23B).

5. A curtain airbag device as recited in any one of claims 1 to 4, and further comprising :
an inflator (10) for supplying gas to the curtain airbag (20).

## Patentansprüche

1. Seitenairbagvorrichtung mit:
einem Seitenairbag (20), der ausgebildet ist, um sich entlang einer Seite einer Fahrzeugkarosserie (1) vorhangartig zu entfalten, und
einer Seitenairbag-Halterung (40B) zum Montieren des Seitenairbags (20) an der Fahrzeugkarosserie (1), wobei die Seitenairbag-Halterung (40B) aufweist:
einen Fahrzeugkarosserie-Befestigungsabschnitt (45) zum Befestigen der Seitenairbag-Halterung (40B) an der Fahrzeugkarosserie (1), und
einen Airbag-Montageabschnitt (41) zum Montieren eines in einem Randabschnitt des Seitenairbags (20) vorgesehenen Befestigungsteils (23B),
wobei der Airbag-Montageabschnitt (41)
gegenüber dem Fahrzeugkarosserie-Befestigungsabschnitt (45) zum Innenraum der Fahrzeugkarosserie (1) hin abgewinkelt oder gebogen ist,
**dadurch gekennzeichnet, dass**
der Airbag-Montageabschnitt (41) ein Durchgangsloch (48) aufweist, das dem Befestigungsteil (23B) des Seitenairbags (20) ermöglicht,
in einer schlaufenartigen Form um einen Außenrand des Airbag-Montageabschnitts (41) herum zurückgeklappt zu werden, nachdem es durch das Durchgangsloch (48) hindurchgesteckt wurde, und
wobei, nach dem Hindurchstecken durch das Durchgangsloch (48), beide Abschnitte des Befestigungsteils (23B) übereinandergelegt und aneinander befestigt werden.

2. Seitenairbagvorrichtung nach Anspruch 1, wobei
der Airbag-Montageabschnitt (41) in der Lage ist, eine Gegenkraft (F1) aufzunehmen, die auf die Seitenairbag-Halterung (40B) aufgebracht wird, wenn das Aufblasen des Seitenairbags eingeleitet wird, und,
wenn der Airbag aufgeblasen ist, der Airbag-Montageabschnitt (41) durch eine Zugkraft (F2), die der Wirkungsrichtung der Gegenkraft (F1) entgegen gerichtet ist, elastisch oder plastisch deformiert werden kann, wenn die Zugkraft (F2) sich aus der abwärts gerichteten Ausdehnung des Seitenairbags (20) ergibt.

3. Seitenairbagvorrichtung nach Anspruch 1 oder 2, wobei der Airbag-Montageabschnitt (41) derart vorgesehen ist, dass er gegenüber dem Fahrzeugkarosserie-Befestigungsabschnitt (45) in einem im Wesentlichen rechten Winkel zum Innenraum der Fahrzeugkarosserie hin gebogen ist.

4. Seitenairbagvorrichtung nach Anspruch 3, wobei das Durchgangsloch ein Schlitz (48) mit einer Länge gleich oder größer als der Breite des Befestigungsteils (23B) ist.

5. Seitenairbagvorrichtung nach einem der Ansprüche 1 bis 4, ferner mit:
einem Gasgenerator (10) zum Versorgen des Seitenairbags (20) mit Gas.

## Revendications

1. Dispositif d'airbag rideau, comprenant :
un airbag rideau (20) prévu pour s'expanser sous la forme d'un rideau le long d'un côté d'une caisse (1) de véhicule, et
un support (40B) d'airbag rideau pour le montage de l'airbag rideau (20) sur la caisse (1) du véhicule, ledit support (40B) d'airbag rideau comportant :
une partie de fixation (45) à la caisse du véhicule pour fixer le support (40B) d'airbag rideau à la caisse (1) du véhicule, et
une partie de montage (41) d'airbag pour le montage d'une pièce de fixation (23B) prévue dans une zone de bord de l'airbag rideau (20),
ladite partie de montage (41) d'airbag
étant pliée angulairement ou cintrée vers l'intérieur de la caisse (1) du véhicule par rapport à la partie de fixation (45) à la caisse du véhicule,
**caractérisé**
**en ce que** la partie de montage (41) d'airbag présente un trou débouchant d'insertion (48) permettant à la pièce de fixation (23B) de l'airbag rideau (20) d'être repliée en boucle autour d'un bord extérieur de la partie de montage (41) d'airbag après avoir été insérée dans le trou débouchant d'insertion (48), et
**en ce qu'**après insertion dans le trou débouchant d'insertion (48), les deux parties de la pièce de fixation (23B) se chevauchent et se fixent l'une l'autre.

2. Dispositif d'airbag rideau selon la revendication 1, où
la partie de montage (41) d'airbag est prévue pour recevoir une force antagoniste (F1) appliquée sur le support (40B) d'airbag rideau lors du déclenchement du gonflage de l'airbag rideau, et
où, une fois l'airbag gonflé, la partie de montage (41) d'airbag est prévue pour être déformée élastiquement ou plastiquement par une force de traction (F2) directement opposée à la direction effective de la force antagoniste (F1) quand ladite force de traction (F2) suit l'expansion vers le bas de l'airbag rideau (20).

3. Dispositif d'airbag rideau selon la revendication 1 ou la revendication 2, où la partie de montage (41) d'airbag est prévue dans un état de pliage angulaire vers l'intérieur de la caisse du véhicule sensiblement à angle droit par rapport à la partie de fixation (45) à la caisse du véhicule.

4. Dispositif d'airbag rideau selon la revendication 3, où le trou débouchant d'insertion est une fente (48) présentant une longueur supérieure ou égale à la largeur de la pièce de fixation (23B).

5. Dispositif d'airbag rideau selon l'une des revendications 1 à 4, et comprenant en outre :
un générateur de gaz (10) pour le refoulement de gaz dans l'airbag rideau (20).
